**Europäisches Patentamt**

**European Patent Office**

**Office européen des brevets**

(19)

(11) Veröffentlichungsnummer: **0 011 099**
**B1**

(12) **EUROPÄISCHE PATENTSCHRIFT**

(45) Veröffentlichungstag der Patentschrift: **03.11.82**

(21) Anmeldenummer: **79103366.5**

(22) Anmeldetag: **10.09.79**

(51) Int. Cl.³: **D 05 B 69/10,**
**D 05 B 69/30, G 01 P 3/36**

(54) Impulsgeber für drehzahlgeregelte Antriebe.

(30) Priorität: **09.11.78 DE 2848612**

(43) Veröffentlichungstag der Anmeldung:
**28.05.80 Patentblatt 80/11**

(45) Bekanntmachung des Hinweises auf die Patenterteilung:
**03.11.82 Patentblatt 82/44**

(84) Benannte Vertragsstaaten:
**CH FR IT SE**

(56) Entgegenhaltungen:
**DE - A - 2 416 113**
**DE - U - 7 339 506**
**FR - A - 2 222 473**
**FR - A - 2 393 868**
**GB - A - 1 481 367**
**US - A - 3 738 297**

(73) Patentinhaber: **Pfaff Haushaltmaschinen GmbH**
**Gritznerstrasse 11**
**D-7500 Karlsruhe-Durlach (DE)**

(72) Erfinder: **Hanus, Helfried**
**D-7500 Karlsruhe-Durlach**
**D-7500 Karlsuhe-Durlach (DE)**
Erfinder: **Winkler, Uwe**
**Merkurweg 12**
**D-7505 Ettlingen (DE)**
Erfinder: **Kemmel, Patrice Jean**
**Paracelsusstrasse 6**
**D-7513 Stutensee (DE)**

(74) Vertreter: **Klein, Friedrich**
**Königstrasse 154**
**D-6750 Kaiserslautern (DE)**

Impulsgeber für drehzahlgeregelte Antriebe

Die Erfindung betrifft einen Impulsgeber für drehzahlgeregelte Antriebe, insbesondere für Nähmaschinenantriebe, mit einer synchron zur Hauptwelle der Maschine umlaufenden Welle und einer darauf befestigten mit Hell-Dunkel-Zonen versehenen Impulsscheibe, die zwischen einen Lichtsender- und einen Lichtempfänger-baustein ragt, welche in einer die Impulsscheibe umgebenden, mit dem Gehäuse der Nähmaschine verbundenen Kapsel befestigt sind.

Bei den bisher bekannten Impulsgebern dieser Art (DE—A—24 16 113) ist die den Lichtsender- und den Lichtempfängerbaustein tragende Kapsel einseitig auf der die Impulsscheibe tragenden Welle gelagert. Da die Impulsscheibe teilweise mit sehr schmalen Hell-Dunkel-Zonen ausgestattet ist, muß die Lage des Lichtsender- und des Lichtempfängerbasuteines äußerst genau eingestellt und beim Betrieb aufrechterhalten werden, um eine einwandfreie Funktion der Bauteile zu gewährleisten. Bei den bekannten Anordnungen ist daher eine aufwendige Lagerung erforderlich, damit die Kapsel beim Umlauf der Impulsscheibe keine unerwünschten Schwingbewegungen ausführt und dann die Funktion des Impulsgebers beeinträchtigt. Außerdem erfordert das Einsetzen der Bausteine für den Lichtsender und den Lichtempfänger in das Gehäuse und ihre Ausrichtung gegenseitig und gegenüber der Impulsscheibe eine arbeitsaufwendige Montage, wenn eine zuverlässige Arbeitsweise de Impulsgebers erzielt werden soll. Die Justierarbeit wird besonders dann noch sehr erschwert, wenn das Gehäuse des Impulsgebers verhältnismäßig klein und damit auch die Hell-Dunkelzonen der Impulsscheibe sehr schmal sind.

Die Erfindung bezweckt die Beseitigung dieser Nachteile. Ihr liegt daher die Aufgabe zugrunde, eine beim Zusammenfügen der Kapsel des Impulsgebers selbsttätige Zentrierung der Impulsscheibe gegenüber der Kapsel und eine genaue Einstellung der Impulsscheibe gegenüber den in der Kapsel angeordneten Lichtsender- und Lichtempfängerbausteinen zu erzielen und gleichzeitig einen Impulsgeber zu schaffen, welcher bei einfacher Herstellung ohne aufwendige Montagearbeit eine günstige Unterbringung der Bausteine gewähtleistet.

Erfindungsgemäß wird dies dadurch gelöst, daß die Kapsel aus zwei miteinander verbundenen Kapselteilen besteht, die mit je einer radial zur Welle zugänglichen Aufnahmekammer für den Lichtsender- bzw. Lichtempfängerbaustein ausgestattet sind, deren an den Innenraum der Kapsel angrenzende Wände achsparallele Blendenöffnungen zum Durchgang der Lichtstrahlen zwischen dem Lichsender- und dem Lichtempfängerbaustein aufweisen, und daß beiderseits der Impulsscheibe jeweils eines der Kapselteile mittels radialer und axialer Lagerflächen unmittelbar oder mittelbar auf der Welle gelagert ist.

Dadurch wird nun eine montagemäßig vorteilhafte Konstruktion bei gleichzeitiger einwandfreier Abdichtung der Impulsscheibe und der Bausteine gegen äußere Einflüsse erzielt. Außerdem wird beim Zusammenfügen der Kapsel des Impulsgebers durch die beiderseitige besondere Lagerung eine selbsttätige Zentrierung der Impulsscheibe gegenüber der Kapsel in axialer und radialer Richtung erreicht.

Eine sichere Unterbringung und eine leichte Montage des Lichtsender- und Empfängerbausteines lassen sich durch die in dern Kennzeichnungsteilen der Patentansprüche 2 bis 5 beschriebenen Merkmale erzielen.

Eine sowohl im Aufbau als auch in der Bedienung recht einfache und in ihrer Wirkung zuverlässige Verbindung zwischen dem Impulsgeber und dem Antrieb ergibt sich durch die in den Kennzeichnungsteilen der Patentansprüche 7 bis 10 angegebenen Merkmale.

In der Zeichnung ist ein Ausführungsbeispiel eines Impulsgebers nach der Erfindung dargestellt. Es zeigen:

Fig. 1 einen Längsschnitt durch den Impulsgeber,

Fig. 2 eine Seitenansicht des Impulsgebers,

Fig. 3 die Kapsel und den Scheibenträger, jeweils geschnitten, in auseinandergezogenem Zustand,

Fig. 4 einen Schnitt nach der Linie IV—IV der Fig. 3,

Fig. 5 eine Draufsicht auf die Impulsscheibe und

Fig. 6 einen Schnitt nach der Linie VI—VI der Fig. 3.

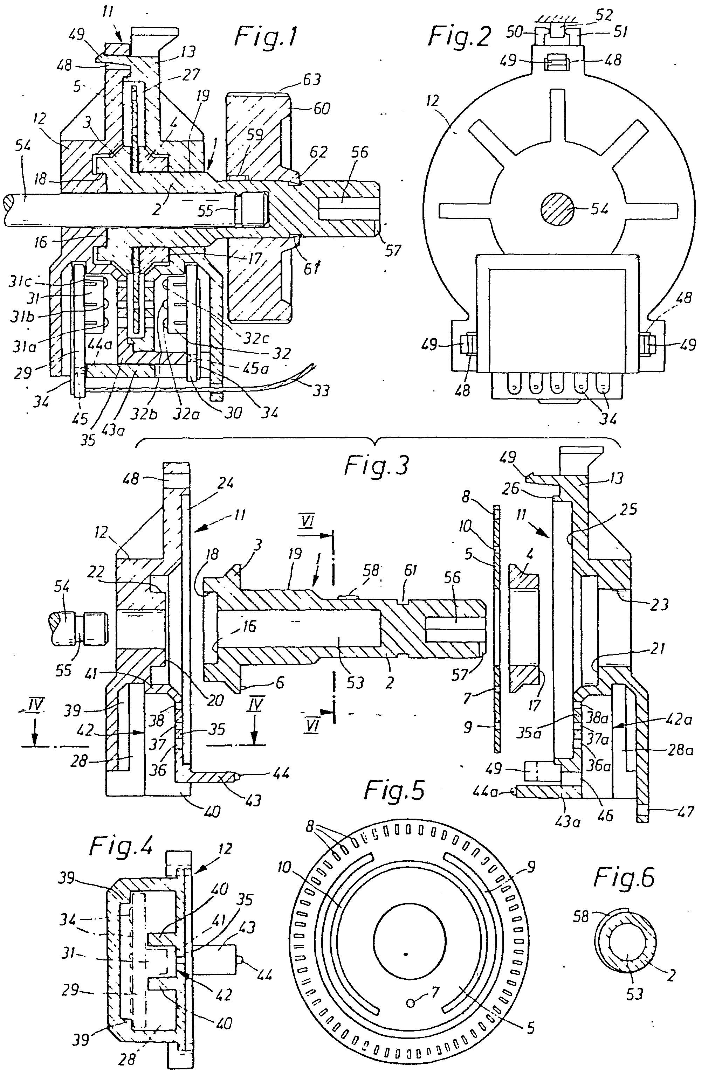

Der Impulsgeber weist einen Scheibenträger 1 (Fig. 1 und 3) auf, der aus einer Welle 2 mit einer Anlagewand 3 und einem Klemmring 4 besteht. Gegen die Anlagewand 3 legt sich eine Impulsscheibe 5 an. Diese wird mittels eines in der Anlagewand 3 befestigten Stiftes 6, der in eine Bohrung 7 in der Impulsscheibe 5 ragt, gegen Verdrehung auf der Welle 2 gesichert. Die Impulsscheibe 5 ist undurchsichtig und weist jeweils auf Kreisbahnen liegende durchsichtige Zonen auf. Auf der äußeren Kreisbahn sind schmale durchsichtige Fenster 8 (Fig. 5) und auf der mittleren und der inneren Kreisbahn durchsichtige Kreisringsegmente 9 und 10 angeordnet. Die Impulsscheibe 5 wird mittels des Klemmringes 4 (Fig. 1 und 3), der auf die Welle 2 mit Preßsitz aufgeschoben ist, gegen die Anlagewand 3 gedrückt.

Die Impulsscheibe 5 wird von einer Kapsel 11 umschlossen, die aus zwei Kapselteilen 12 und 13 besteht und auf Lagerstellen gelagert ist, die an dem Scheibenträger 1 ausgebildet sind. Dazu weist dieser in axialer Richtung wirkende Lagerflächen 16 und 17 sowie in radialer Richtung wirkende Lagerflächen 18 und 19 auf, die mit entsprechenden in axialer Richtung wirkende Lagerflächen 20 und 21 sowie in radialer Richtung wirkenden Lagerflächen 22 und 23 an den Kapselteilen 12 und 13 zusammenwirken. Das Kapselteil 12 ist mit einer Ausdrehung 24 und das Kapselteil 13 mit einer Ausdrehung 25 versehen. Die Ausdrehung 25 umgibt ein ringförmiger Steg 26, der sich im zusammengebauten Zustand der Kapsel 11 in die Ausdrehung 24 einlegt. Die beiden Ausdrehungen 24 und 25 bilden dann einen abgeschlossenen Innenraum 27 für die Impulsscheibe 5.

Beide Kapselteile 12 und 13 weisen Aufnahmekammern 28 bzw. 28a (siehe auch Fig. 4) zur Aufnahme von Leiterplatten 29 bzw. 30 auf, welche mit einem Lichtsenderbaustein 31 bzw. einem Lichtempfängerbaustein 32 bestückt sind. Die Bausteine 31 und 32 bestehen jeweils aus drei Lichtsendern 31a, 31b und 31c bzw. aus drei Lichtempfängern 32a, 32b und 32c, die über Leitungen 33 und auf den Leiterplatten 29 und 30 vorgesehene Leiterbahnen 34 in geeigneter Weise untereinander und mit der Motorregelung der Nähmaschine verbunden sind. Je ein Lichtsender 31a, 31b, 31c und ein Lichtempfänger 32a, 32b, 32c stehen sich dabei gegenüber und zwar in einer derartigen Radialentfernung von der Drehachse der Impulsscheibe 5, daß der äußere Lichtstrahl der drei Lichtsender 31a, 31b und 31c durch die bahn der Fenster 8 und der mittlere und der innere Lichtstrahl durch die Bahn der Kreisringsegmente 9 und 10 hindurchgeht.

In der Verbindungsgeraden zwischen je einem Lichtsender 31a, 31b, 31c und dem dazugehörigen Lichtempfänger 32a, 32b, 32c sind in der Trennwand 35 zwischen der Aufnahmekammer 28 und dem Innenraum 27 der Kapsel 11 Blendenöffnungen 36, 37 und 38 sowie in der Trennwand 35a zwischen der Aufnahmekammer 28a und dem Innenraum 27 Blendenöffnungen 36a, 37a und 38a zum Durchtritt der Lichtstrahlen der Lichtsender 31a, 31b und 31c vorgesehen.

Die Leiterplatte 29 ist in die Aufnahmekammer 28 einschiebbar, wobei sie sich einerseits gegen zwei im Abstand voneinander angeordnete Anschlagleisten 39 und andererseits gegen zwei ebenfalls im abstand voneinander angeordnete Stege 40 anlegt. Die beiden Stege 40 bilden zusammen mit einer Querverbindung 41 und der Trennwand 35 eine den Baustein 31 bis auf zwei Seiten umschließenden Schacht 42.

Die Aufnahmekammer 28a ist spiegelbildlich zur Aufnahmekammer 28 angeordnet und im Prinzip gleich aufgebaut, so daß eine besondere Beschreibung entfallen kann. Die einzelnen Elemente der Aufnahmekammer 28a sind daher mit den gleichen Bezugsziffern wie die der Aufnahmekammer 28 versehen, sie weisen zur Unterscheidung lediglich zusatzlich den Bezugsbuchstaben a auf.

Die eine Seitenwand des Schachtes 42 in der Aufnahmekammer 28 wird beim Einschieben der Leiterplatte 29 von dieser gebildet, wie die Fig. 4 zeigt. Beim Zusammenfügen der Kapselteile 12 und 13 schiebt sich eine an dem Kapselteil 13 vorgesehene Platte 43a über die Einschuböffnung des Schachtes 42 und deckt den Lichtsenderbaustein 31 gegen Licht- und Staubeinfall ab. Am vorderen Ende der Platte 43a ist ein Ansatz 44a vorgesehen, der sich in eine entsprechende Öffnung 45 in der Leiterplatte 29 einlegt und diese in ihrer Lage fixiert.

Die an dem Kapselteil 12 angebrachte Platte 43 ist in ihrer Höhenlage um die Stärke der Platte 43a nach innen versetzt und schiebt sich beim Zusammenfügen der Kapselteile 12 und 13 durch einen Schlitz 46 in der Kapsel 13 hindurch über die Einschuböffnung des Schachtes 42a. In dem Kapselteil 13 ist außerdem ein Schlitz 47 zur Aufnahme der Leitungen 33 vorhanden. Ein am freien Ende der Platte 43 vorhandener Ausatz 44 greift in eine entsprechende Öffnung 45a in der Leiterplatte 30 ein.

Das Kapselteil 12 weist Öffnungen 48 (siehe auch Fig. 2) auf, in die sich beim Zusammenfügen der Kapselteile 12 und 13 an dem Kapselteil 13 angeordnete Rastelemente 49 einschieben. Diese legen sich hinter die Wand des Kapselteiles 12 und sichern das gegenseitige Lösen der Kapselteile 12 und 13 nach dem Zusammenfügen.

Das Kapselteil 13 ist mit zwei spiegelbildlich ausgebildeten Anschlägen 50 und 51 versehen, die einen angedeuteten Gegenanschlag 52 an dem Gehäuse der Maschine umgreifen.

Der Scheibenträger 1 weist eine axiale Bohrung 53 zum Aufschieben auf das freie Ende einer mit der Hauptwelle der Nähmaschine umlaufenden Welle 54 auf, die in der Nähe ihres Endes mit einer Nut 55 versehen ist. Eine in axialer Richtung in derm Scheibenträger 1 verlaufende und im Querschnitt Sechskantprofil aufweisende Öffnung 56 dient zum Einführen eines Sechskantschlüssels. An seinem Ende weist der Scheibenträger 1 eine Markierung 57 auf.

In der Querschnittszone der Nut 55 der Welle 54 weist der Scheibenträger 1 eine exzentrische Verdickung 58 auf, die also Spiralkeil ausgebildet ist. Die Verdickung 58 wirkt mit einer entsprechenden spiralförmig ausgebildeten Ausnehmung 59 in einem Klemmring 60 zusammen, der auf dem Scheibenträger 1 gelagert ist und seitliche, in eine Ringnut 61 des Scheibenträgers 1 ragende Nasen 62 trägt. Auf seiner Umfangsfläche ist der Klemmring 60 zur besseren Betätigung nit einer Rasterung 63 versehen.

Zur Montage des Impulsgebers wird die Impulsscheibe 5 gegen die Anlagewand 3 der Welle 2 angelegt und dabei so weit verdreht, bis sich der Stift 6 in die Bohrung 7 einlegt. Danach wird der Klemmring 4 auf die Welle 2 aufgeschoben und gegen die Impulsscheibe 5 gedrückt. Nach Aufschieben des Kapselteiles 13 auf die Welle 2 wird der Klemmring 60 so weit auf die Welle 2 geschoben, bis seine Nasen 62 in die Ringnut 61 einrasten.

Nunmehr werden die beiden Leiterplatten 29 und 30 in die Aufnahmekammern 28 und 28a der Kapselteile 12 und 13 sowie die Leitungen 33 in den Schlitz 47 eingelegt, und die Kapselteile 12 und 13 zusammengefügt. Dabei schieben sich die Rastelemente 49 des Kapselteiles 13 durch die Öffnungen 48 im Kapselteil 12 hindurch und rasten hinter der Wand des Kapselteiles 12 ein.

Gleichzeitig schieben sich die Platten 43 und 43a über die Schächte 42 und 42a, so daß die Bausteine 31 und 32 vollständig nach außen abgeschirmt werden. In der Endstellung der Platten 43 und 43a legen sich außerdem die daran befestigten Ansätze 44 und 44a in die Öffnungen 45 und 45a der Leiterplatten 29 und 30 ein, so daß diese in ihrer Lage gesichert werden.

Bei der Zusammenfügung der beiden Kapselteile 12 und 13 werden diese selbsttätig mit ihren Lagerflächen 20 bis 23 gegen die Lagerflächen 16 bis 19 der Welle 2 geschoben. Durch die Lagerung der Kapsel 11 auf dem Scheibenträger 1 beiderseits der Impulsscheibe 5 wird dabei eine genaue Führung der Kapsel 11 erzielt und eine exakte Einstellung zwischen der Impulsscheibe 5 und den in den Aufnahmekammern 28 und 28a der Kapsel 11 befestigten Bausteinen 31 und 32 sowohl in axialer als auch in radialer Richtung gewährleistet.

Die Befestigung des Impulsgebers auf der Welle 54 der Maschine geschieht nach Aufschieben des Scheibenträgers 1 auf diese Welle. Zuvor wird mit Hilfe eines üblichen Sechskantschlüssels, der in die Öffnung 56 der Welle 2 eingeführt wird, die Impulsscheibe 5 durch Verdrehen des Scheibenträgers 1 mit der Markierung 57 in eine gewünschte Lage eingestellt. Die Befestigung des Scheibenträgers 1 erfolgt durch Verdrehen des Klemmringes 60, wobei sich die beiden Keilflächen zwischen der Verdickung 58 auf der Welle 2 und der Ausnehmung 59 in dem Klemmring 60 gegenseitig verspannen und das in dieser Querschnittszone vorhandene Material der Welle 2 gegen die Welle 54 gepreßt wird. Der Scheibenträger 1 word dabei gegen Verdrehung auf der Welle 54 gesichert.

Beim Verspannen der Welle 2 mit der Welle 54 verformt sich ein Teil des vorzugsweise aud geeignetem thermoplastischem Kunststoff bestehenden Materials der Welle 2 plastisch und drückt sich in die Nut 55 der Welle 54 ein, so daß auch eine genügend große axiale Festlegung des Impulsgebers erreicht wird.

**Patentansprüche**

1. Impulsgeber für drehzahlgeregelte Antriebe, insbesondere für Nähmaschinenantriebe, mit einer synchron zur Hauptwelle der Maschine umlaufenden Welle (2) und einer darauf befestigten mit Hell-Dunkel-Zonen versehenen Impulsscheibe (5), die zwischen einen Lichtsender- und einen Lichtempfängerbaustein (31 bzw. 32) ragt, welche in einer die Impulsscheibe umgebenden, mit dem Gehäuse der Nähmaschine verbundenen Kapsel (11) befestigt sind, dadurch gekennzeichnet, daß die Kapsel (11) aus zwei miteinander verbundenen Kapselteilen (12, 13) besteht, die mit je einer radial zur Welle (2) zugänglichen Aufnamekammer (28, 28a) für den Lichtsender- bzw. Lichtempfängerbaustein (31 bzw. 32) ausgestattet sind, deren an den Innenraum (27) der Kapsel (11) angrenzende Trennwände (35, 35a) achsparallele Blendenöffnungen (36, 37, 38, bzw. 36a, 37a, 38a) für den Durchgang der Lichtstrahlen zwischen dem Lichtsender- und dem Lichtempfängerbaustein (31 bzw. 32) aufweisen, und daß beiderseits der Impulsscheibe (5) jeweils eines der Kapselteile (12, 13) mittels radialer und axialer Lagerflächen (16 bis 19) umittelbar oder mittelbar auf der Welle (2) gelagert ist.

2. Impulsgeber nach Anspruch 1, dadurch gekennzeichnet, daß jede Aufnahmekammer (28, 28a) als Einschubfach für eine den Lichtsender- bzw. Lichtempfängerbaustein (31, 32) tragende Leiterplatte (29, 30) ausgebildet ist.

3. Impulsgeber nach Patentanspruch 2, dadurch gekennzeichnet, daß innerhalb der Aufnahmekammer (28, 28a) eines jeden Kapselteiles (12, 13) ein den Lichtsender- bzw. Lichtempfänger-Baustein (31, 32) aufnehmender Schacht (42 bzw. 42a) vorgesehen ist, dessen eine Seitenwand von der Leiterplatte (29, 30) gebildet ist und dessen Öffnung durch eine an dem anderen Kapselteil (12, 13) angeordnete Platte (43, 43a) abdeckbar ist.

4. Impulsgeber nach Anspruch 2 oder 3, dadurch gekennzeichnet, daß jedes Kapselteil (12, 13) einen Ansatz (44, 44a) aufweist, der in eine Öffnung (45, 45a) in der in dem anderen Kapselteil (12, 13) untergebrachten Leiterplatte (29, 30) ragt.

5. Impulsgeber nach Anspruch 4, dadurch gekennzeichnet, daß der Ansatz (44, 44a) an der an dem Kapselteil (12, 13) angeordneten Platte (43, 43a) befestigt ist.

6. Impulsgeber nach Anspruch 1, dadurch gekennzeichnet, daß die Kapselteile (12, 13) zusammensteckbar und durch Rastelemente (49) miteinander verriegelbar sind.

7. Impulsgeber nach Anspruch 1, dadurch gekennzeichnet, daß die die Impulsscheibe (5) tragende Welle (2) also Hohlwelle ausgebildet ist, die auf einer synchron zu der Hauptwelle der Maschine umlaufenden Welle (54) durch Klemmverspannung befestigt ist.

8. Impulsgeber nach Anspruch 7, dadurch gekennzeichnet, daß die Welle (2) eine exzentrische Verdickung (58) aufweist, die mit einer entsprechenden exzentrischen Ausnehmung (59) eines auf der Welle (2) drehbar gelagerten Klemmringes (60) zusammenwirkt.

9. Impulsgeber nach Anspruch 8, dadurch gekennzeichnet, daß die Klemmverbindung zwischen der Welle (2) und dem Klemmring (60) also Spiralkeilverbindung ausgebildet ist.

10. Impulsgeber nach Anspruch 8 oder 9, dadurch gekennzeichnet, daß die Welle (2) eine Ringnut (61) aufweist, in welche an dem Klemmring (60) vorgesehenen Nasen (62) ragen.

## Revendications

1. Générateur d'impulsions pour groupes moteurs à vitesse de rotation régulée, notamment pour groupes moteurs de machines à coudre, comportant un arbre (2) tournant en synchronisation avec l'arbre principal de la machine et un disque d'impulsions (5), calé sur cet arbre (2) et muni de zones claires et de zones foncées, qui saille entre un bloc émetteur (31) et un bloc récepteur (32) de lumière fixés dans une capsule (11) qui entoure le disque et est liée au carter del machine à coudre, caractérisé en ce que la capsule (11) est formée de deux parties assemblées (12, 13), dont chacune est munie d'une chambre (28, 28a) accessible radialement à l'arbre (2), pour loger respectivement le bloc émetteur (31) et le bloc récepteur (32) de lumière, chambres dont les parois (35, 35a) qui les séparent respectivement de l'espace intérieur (27) de la capsule (11) sont munies d'orifices de diaphragme (respectivement 36, 37, 38 et 36a, 37a, 38a) pour le passage des rayons lumineux du bloc émetteur (31) vers le block récepteur (32) et en ce que les parties (12, 13) de la capsule (11) sont montées directement ou indirectement sur l'arbre (2), une de chaque côté du disque d'impulsions (5), au moyen de portées radiales et axiales (16 à 19).

2. Générateur d'impulsions selon la revendication 1, caractérisé en ce que chaque chambre (28, 28a) est conformée en tiroir pour une plaque de circuits imprimés (29, 30) portant respectivement le bloc émetteur (31) ou le bloc récepteur (32).

3. Générateur d'impulsions selon la revendication 2, caractérisé en ce qu'à l'intérieur de la chambre (28, 28a) de chaque partie de capsule (12, 13) est prévue une cheminée (42, 42a) pour loger respectivement le bloc émetteur (31) ou le bloc récepteur (32), dont une paroi latérale est formée par la plaque de circuits (29, 30) et dont l'ouverture peut être couverte par une plaque (43, 43a) disposée sur l'autre partie de capsule (12, 13).

4. Générateur d'impulsions selon la revendication 2 ou la revendication 3, caractérisé en ce que chaque partie de capsule (12, 13) présente un prolongement (44, 44a) qui saille dans une ouverture (45, 45a) ménagée dans la plaque de circuits (29, 30) logée dans l'autre partie de capsule (12, 13).

5. Générateur d'impulsions selon la revendication 4, caractérisé en ce que le prolongement (44, 44a) est fixé sur la plaque (43, 43a) disposée sur la partie de capsule (12, 13).

6. Générateur d'impulsions selon la revendication 1, caractérisé en ce que les parties de capsule (12, 13) s'assemblent par emboîtement et sone verrouillées l'une sur l'autre au moyen d'éléments d'encliquetage (49).

7. Générateur d'impulsions selon la revendication 1, caractérisé en ce que l'arbre (2) qui porte le disque d'impulsions (5) est conformée en arbre creux, qui est fixé par serrage sur un arbre (54) tournant en synchronisation avec l'arbre principal de la machine.

8. Générateur d'impulsions selon la revendication 7, caractérisé en ce que l'arbre (2) présente un épaississement excentrique (58), qui coopère avec un évidement excentrique correspondant (59) d'un collier de serrage (60) monté en rotation sur l'arbre (2).

9. Générateur d'impulsions selon la revendication 8, caractérisé en ce que la liaison par serrage entre l'arbre (2) et le collier de serrage (60) est conformée en liaison par clavetage en spirale.

10. Générateur d'impulsions selon la revendication 8 ou la revendication 9, caractérisé en ce que l'arbre (2) présente une gorge (61) dans laquelle saille des nez (62) prévus sur le collier de serrage (60).

## Claims

1. Impulse transmitter for rotational speed controlled drive, particularly for sewing machine drives, with a shaft (2) rotating synchronously to the main shaft of the machine and an impulse disc (5), provided with light-dark-zones, secured thereon, which projects between a light transmitter — and a light receiver store (31 or 32), which are secured in a capsule (11) enclosing the impulse disc and connected with the housing of the sewing machine, characterised in that the capsule (11) consists of two mutually connected capsule parts (12, 13) which are each equipped with a reception chamber (28, 28a), accessible radially to the shaft (2), for the light transmitter — or light receiver store (31 or 32), which have axially parallel diaphragm apertures (36, 37, 38 or 36a, 37a, 38a) on the partition walls (35, 35a) adjoining the interior (27) of the capsule (11), for the passage of the light rays between the light transmitter — or light receiver store (31 or 32) and that one of the capsule parts (12, 13) mutually on the impulse disc (5) is mounted on the shaft (2) directly or indirectly by means of radial and axial bearing surfaces (16 to 19).

2. Impulse transmitter according to claim 1, characterised in that each reception chamber (28, 28a) is formed as slide-in compartment for a conductor plate (29, 30) carrying the light transmitter — or light receiver store (31, 32).

3. Impulse transmitter according to claim 2, characterised in that within the reception chamber (28, 28a) of one of each capsule part (12, 13) there is provided a compartment (42 or 42a) receiving the light transmitter or light receiver store (31, 32), one side wall of which compartment is formed by the conductor plate (29, 30) and the opening of which is coverable by a plate (43, 43a) arranged on the other capsule part (12, 13).

4. Impulse transmitter according to claim 2 or 3, characterised in that each capsule part (12, 13) has an extension (44, 44a) which projects into the conductor plate (29, 30) accommodated in the other capsule part (12, 13).

5. Impulse transmitter according to claim 4, characterised in that the expansion (44, 44a) is fastened to the plate (43, 43a) arranged on the capsule part (12, 13).

6. Impulse transmitter according to claim 1, characterised in that the capsule parts (12, 13) can be assembled together and are lockable together through locking elements (49).

7. Impulse transmitter according to claim 1, characterised in that the shaft (2) carrying the impulse disc (5) is formed as a hollow shaft, which is fastened through clamping bracing to a shaft (54) rotating synchronously to the main shaft of the machine.

8. Impulse transmitter according to claim 7, characterised in that the shaft (2) has an eccentric thickening, which cooperates with a corresponding eccentric recess (59) of a clamping ring (60) rotatably mounted on the shaft (2).

9. Impulse transmitter according to claim 8, characterised in that the clamping connection is formed as a spiral wedge connection between the shaft (2) and the clamping ring (60).

10. Impulse transmitter according to claim 8 or 9, characterised in that the shaft (2) has an annular groove (61), into which projects a nose (62) provided on the clamping ring (60).

0011099

Fig.1 Fig.2 Fig.3 Fig.4 Fig.5 Fig.6

1